Europäisches Patentamt

European Patent Office

Office européen des brevets

(11) Publication number: **0 409 599 A2**

# EUROPEAN PATENT APPLICATION

(21) Application number: 90307864.0

(22) Date of filing: 18.07.90

(51) Int. Cl.5: **C08G 65/26, C08G 18/48**

(30) Priority: 19.07.89 JP 184588/89
19.07.89 JP 184585/89
24.07.89 JP 188837/89
24.07.89 JP 188838/89
26.01.90 JP 15002/89
22.02.90 JP 39806/89

(43) Date of publication of application:
23.01.91 Bulletin 91/04

(84) Designated Contracting States:
DE FR GB IT NL

(71) Applicant: MITSUI TOATSU CHEMICALS INC.
No. 2-5, Kasumigaseki 3-chome
Chiyoda-Ku Tokyo 100(JP)

(72) Inventor: Ozaki, Satoshi
Takiharu Ryo, Takiharu-cho 5, Minami-Ku
Nagoya-Shi, Aichi-Ken 457(JP)
Inventor: Izukawa, Tsukura
22-3 Aza Takami, Ohtaka-Cho, Midori-Ku
Nagoya-Shi, Aichi-Ken 459(JP)

Inventor: Kawakami, Haruhiko
4-19 Morigo-cho, Atsuta-Ku
Nagoya-Shi, Aichi-Ken 456(JP)
Inventor: Masuda, Takayoshi
1-2 Mukai Hazama, Nawa-Machi
Tokai-Shi, Aichi-Ken 476(JP)
Inventor: Kimura, Masayuki
2882 Iijima-cho, Sakae-Ku
Yokohama-Shi, Kanagawa-Ken 244(JP)
Inventor: Nozawa, Toshio
Mitsui Toatsu Kenkyusho, 1190 Kasama-cho,
Sakae-Ku
Yokohama-shi, Kanagawa-Ken 247(JP)
Inventor: Hashiba, Masahiko
4-1-101 Zengyo Danchi
Fujisawa-Shi, Kanagawa-Ken 251(JP)

(74) Representative: Hayward, Denis Edward Peter
et al
Lloyd Wise, Tregear & Co. Norman House
105-109 Strandand
London WC2R 0AE(GB)

(54) Polyol, polyurethane resin and utilization thereof.

(57) The present invention relates to a novel polyol obtained by using a specified polyhydric alcohol, polyoxyalkylene polyol, aliphatic amine and/or alkamlamine as a raw material and adding an organic polycarboxylic acid or its anhydride and an alkylene oxide; a polyurethane resin prepared from said novel polyol and an organic polyisocyanate; a rigid polyurethane foam prepared by using a hydrochlorofluorocarbon or hydrofluorocarbon foaming agent which has very low public hazards; and a composite utilizing thereof.

The production of rigid polyurethane foam by using the polyol of the invention can be carried out in good operation efficiency and low public hazards. Additionally, properties of the foam thus obtained is equivalent to those of rigid polyurethane foams obtained by using conventional chlorofluorocarbons. Consequently, the rigid polyurethane foam of the invention is very useful for insulation materials and structural insulation materials.

# POLYOL, POLYURETHANE RESIN AND UTILIZATION THEREOF

## 2. Background of the Invention

### a) Field of the Invention

The present invention relates to a polyol, polyurethane resin, rigid polyurethane foam, preparation process thereof and a composite of said rigid polyurethane foam.

More particularly, the polyol obtained by the present invention is a raw material for preparing polyurethane resin having resistance to dissolving in hydrochlorofluorocarbons (hereinafter abbreviated as HCFC) and hydrofluorocarbons (hereinafter abbreviated as HFC) which are foaming agents causing very low public hazards. The polyol can provide rigid polyurethane foam and its composite by using the above foaming agents.

The rigid polyurethane foam obtained above has excellent properties equivalent to those of conventional polyurethane foams obtained by the use of chlorofluorocarbons (hereinafter abbreviated as CFC) as foaming agents. Hence, the rigid polyurethane foam of the present invention is extremely useful for the insulating materials or the insulating structural materials of electric refrigerators, freezing ware houses, insulation panels, ships and vehicles.

### b) Description of the Prior Art

In the conventional process of producing polyurethane foams, flons, particularly CFC-11 (trichlorofluoromethane) and CFC-12 (dichlorodifluoromethane) which belong to CFC, have been used as a means of foaming. These materials have been recognized as hazardous and environmentally destructive materials which decompose ozone layer of the earth or enhance green house effect, and production and use of these materials have recently been restricted. At the same time, HCFC-123 (2,2-dichloro-1,1,1-trifluoroethane) and HCFC-141b (1,1-dichloro-1-fluoroethane) and additonally HFC -134a (1,1,1,2-tetrafluoroethane), HFC-152a (1,1-difluoroethane) have been focused attention as substitutes for CFC-11 and CFC-12. These substitutes, however, have larger dissolving power to the polyurethane resin as compared with CFC-11 and CFC-12, and thus have been liable to remarkably deteriorate polyurethane foam properties such as decrease in closed cell content and foam strengths. Particularly heat insulation effect which is a characteristic of rigid polyurethane foam is extremely lowered because above flon dissolves walls of closed cell in the foam in the course of foaming reaction.

Consequently, a novel polyurethane resin has been desired. The conventional polyoxyalkylene polyol used for the raw material of polyurethane resin decreases viscosity with increase in the amount of alkylene oxide added. As a result, operations in polyurethane foam production can be conducted with ease. However, excess addition of alkylene oxide leads to dissolution of polyurethane resin into HCFC-123, HCFC-141b and HFC, and tends to made application of these foaming agents substantially impossible. On the other hand, when the amount of alkylene oxide added is reduced, the polyol becomes solid or extremely viscous and is very difficult to handle.

Inventions of Japanese TOKKAI SHO 57-151613 (1982) and Japanese TOKKAI SHO 57-151614 (1982) disclosed a method of blending low molecular weight polyol in order to decrease the viscosity of mixture of amine base polyol and aromatic base polyester polyol (alkylene oxide was not added in the latter).

As mentioned above, in order to maintain resistance to dissolution in HCFC-123, HCFC-141b and HCF, operation efficiency in polyurethane foam production must be greatly sacrificed. Polyoxyalkylene polyol which has a viscosity suitable for foaming operation and is excellent in the mixing and dispersing ability in HCFC-123, HCFC-141b and HFC has never been found.

## 3. Summary of the Invention

The present invention relates to a novel polyol obtained by using a specified polyhydric alcohol, polyoxyalkylene polyol, aliphatic amine and/or alkanolamine as a raw material and adding an organic polycarboxylic acid or its anhydride and an alkylene oxide; a polyurethane resin prepared from said novel polyol and an organic polyisocyanate; a rigid polyurethane foam prepared by using a hydrochlorofluorocarbon or hydrofluorocarbon foaming agent which has very low public hazards; and a composite utilizing thereof.

The production of rigid polyurethane foam by using the polyol of the invention can be carried out in good operation efficiency and low public hazards. Additionally, properties of the foam thus obtained is equivalent to those of rigid polyurethane foams obtained by using conventional chlorofluorocarbons. Consequently, the rigid polyurethane foam of the invention is very useful for insulation materials and structural insulation materials.

4. Detailed Description of the Invention

The primary object of the present invention is, particularly in the production of a rigid polyurethane foam to provide a polyol which gives equivalent operation efficiency in polyurethane foaming operation and resultant foam properties to those of using conventional chlorofluorocarbons even though hydrochlorofluorocarbons and/or hydrofluorocarbons having very low hazards are used.

As a result of an intensive investigation in order to achieve the above object, the present inventors have completed the present invention.

That is, the aspect of the present invention is illustrated by the following (1) to (5).

(1) A polyol prepared by a process comprising using a compound having at least one ester bond and/or amido bond in a molecule or a mixture thereof as a starting material and further adding an alkylene oxide, said compound being obtained by reacting an organic polycarboxylic acid or an anhydride thereof with a single compound or a mixture of the single compound selected from the group consisting of:

(a) a polyhydric alcohol having from 3 to 8 hydroxyl groups in a molecule,

(b) a polyoxyalkylene polyol having from 3 to 8 hydroxyl groups in a molecule,

(c) an aliphatic amine having from 2 to 6 primary and/or secondary amino groups in a molecule and represented by the formula (I):

$$H_2 N-R \underline{\hspace{2cm}} (NH-R)_n \underline{\hspace{2cm}} NH_2 \qquad (I)$$

wherein R is an alkylene group of from 1 to 6 carbon atoms in a molecule and n is 0 or an integer of from 1 to 4, and

(d) an alkanolamine represented by the formula (II) or the formula (III):

$H_2 N\text{-}R_1 OH$     (II)

$HN = (R_1 OH)_2$     (III)

wherein $R_1$ is an alkylene group having from 1 to 6 carbon atoms.

(2) A polyurethane resin prepared by mixing and reacting a polyol with an organic polyisocyanate comprising using the polyol discribed in (1) as a portion or the whole of said polyol.

(3) A rigid polyurethane foam obtained by mixing and reacting an organic polyisocyanate with a resin premix containing a polyol, foaming agent, catalyst, cell regulator and other additives which comprises using the polyol described in (1) as a portion or the whole of said polyol, and said foaming agent being a single or a mixture selected from a group consisting of a hydrochlorofluorocarbon, hydrofluorocarbon, or containing other foaming agent or, if necessary, a mixture thereof with an auxiliary foaming agent which is water and/or a low boiling point compound.

(4) A process for the preparation of a rigid polyurethane foam by mixing and reacting an organic polyisocyanate with a resin premix containing a polyol, foaming agent, catalyst, cell regulator, and other additives which comprises using the polyol described in (1) as a portion or the whole of said polyol, and said foaming agent being a single or a mixture selected from a group consisting of a hydrochlorofluorocarbon, hydrofluorocarbon, or containing other foaming agent or, if necessary, a mixture thereof with an auxiliary foaming agent which is water and/or a low boiling point compound.

(5) A process for the preparation of a rigid polyurethane foam composite by mixing an organic polyisocyanate with a resin premix containing a polyol, forming agent, catalyst, cell regulator and other additives and forming said rigid polyurethane foam on a facing material or in a cavity surrounded by a plurality of the facing material to constitute said composite which comprises using the polyol described in (1) as a portion or the whole of said polyol, and said foaming agent being a single or a mixture selected from a group consisting of a hydrochlorofluorocarbon, hydrofluorocarbon, or, containing other foaming agent or if necessary, a mixture thereof with an auxiliary foaming agent which is water and/or a low boiling point compound.

The polyhydric alcohol (a) or the polyoxyalkylene polyol (b) for use in the process of the invention has from 3 to 8 hydroxyl groups in a molecule, the hydroxyl group reacts with an organic polycarboxylic acid or its anhydride to form a compound having at least one ester bond as a starting material. Alkylene oxide further adds and reacts with the compound to form a polyol having at least one ester skeleton.

Exemplary polyhydric alcohol (a) used in the process of the invention include glycerin, trimethylolpropane, 1,2,6-hexanetriol, triethanolamine, pentaerythritol, tetramethylolcyclohexane, methylglucoside, 2,2,6,6-tetrakis(hydroxyl)cyclohexanol, sorbitol, mannitol and dulcitol. Polyoxyalkylene polyol (b) can be obtained by the addition of alkylene oxide to the above polyhydric alcohol. These compounds can be used singly or in combination.

Representative examples of the organic polycarboxylic acid and the anhydride thereof include succinic acid, phthalic acid, trimellitic acid, pyromellitic acid, methyltetrahydrophthalic acid, maleic acid, and anhydrides of these polycarboxylic acids. These compounds may be used singly or as a mixture.

The alkylene oxide used in the invention includes, for example, ethylene oxide, propylene oxide and butylene oxide. These oxides may be used singly or as a mixture, simultaneously or successively.

The polyol for use in the invention is, as mentioned above, prepared by the addition reaction of 0.125 to 1.0 mole of the organic polycarboxylic acid or its anhydride and subsequently 1.0 to 3.0 moles of alkylene oxide to one of hydroxyl group in the polyhydric alcohol (a) and/or the polyoxyalkylene polyol (b) having from 3 to 8 hydroxyl groups in a molecule.

When the number of hydroxyl group in a molecule is less than 3, the resulting polyurethane foam tends to lower foam strengths. On the other hand, the number of hydroxyl group exceeding 8 in a molecule causes too many ester bonds, too high viscosity of the polyol, and thus poor operation efficiency in the foaming operation.

When the amount of the organic polycarboxylic acid or its anhydride added is less than 0.125 mole per one of the hydroxyl group in the polyhydric alcohol (a) and/or polyoxyalkylene polyol(b), solubility for flons of the rigid polyurethane foam obtained by reacting with polyisocyanate increases and physical properties tends to deteriorate, although mixing and dispersing ability to HCFC and HFC is equivalent to conventional polyols. On the other hand, the organic polycarboxylic acid or its anhydride exceeds 1.0 mole causes high viscosity of polyol, poor mixing and dispersing ability in HCFC and HFC, and results in a disadvantage of rendering the polyurethane foam brittle.

When the amount of alkylene oxide is less than 1.0 mole per one of the hydroxyl group and/or carboxyl group in the starting material, that is, the polyol contains many free hydroxyl group and/or carboxyl groups remained in the molecule, the resulting polyurethane foam has unfavorably poor physical properties. On the other hand, when the amount of alkylene oxide added is in excess of 3.0 moles per one of the hydroxyl group, solubility for flons of the resulting polyurethane foam increases and physical properties tend to deteriorate, although the polyol has a low viscosity and good mixing and dispersing ability in HCFC and HFC.

The calalyst used for the addition reaction of the organic polycarboxylic acid or its anhydride and alkylene oxide to the hydroxyl group of the polyhydric alcohol (a) and/or polyoxyalkylene polyol (b) in the present invention is an amine compound represented by the formula (IV) or formula (V):

$NR_2 R_2 R_3$      (IV)

$R_2 R_3 N (CH_2)_m NR_2 R_3$      (V)

wherein $R_2$ and $R_3$ are a hydrogen atom or a group selected from a group consisting of alkyl group having from 1 to 6 carbon atoms, $-CH_2CH_2OH$ and $-CH_2CH(CH_3)OH$, but $R_2$ and $R_3$ cannot be hydrogen atoms at the same time in the formula (IV), and m is an integer of from 1 to 6.

Exemplary amine compound includes dibutylamine, ethylenediamine, tetramethylenediamine, monoethanolamine, diethanolamine, triethanolamine, isopropanolamine, triethylamine, tri-n-propylamine, di-n-propylamine, n-propylamine, n-amylamine, N,N-dimethylethanolamine, isobutylamine, isoamylamine and methyldiethylamine.

Metal hydroxide can also be used as the catalyst for the above addition reaction. Representative examples of alkali hydroxide include lithium hydroxide, sodium hydroxide, potassium hydroxide, magnesium hydroxide, calcium hydroxide and barium hydroxide.

The above amine and metal hydroxide catalysts can be used singly or in combination.

The amount of the above catalysts used for the invention is from 0.1 to 2.0 parts by weight per 100 parts by weight of the polyhydric alcohol (a) and/or the polyoxyalkylene polyol (b).

The polyol of the present invention can be prepared by charging in an autoclave the polyhdric alcohol (a) and/or poly oxyalkylene polyol(b), organic polycarboxylic acid or its anhydride, and the catalyst, carrying out the reaction of these raw materials and then gradually feeding alkylene oxide to conduct the addition

4

reaction. Preferred reaction temperature is 90 to 130 °C. The temperature of lower than 90 °C is difficult to progress the reaction. On the other hand, the temperature exceeding 130 °C is liable to cause side reactions.

The aliphatic amine (c) for use in the invention has primary and/or secondary amino groups. The sum of both amino groups is from 2 to 6 in a molecule. These amino groups react with the organic carboxylic acid or its anhydride. Alkylene oxide is further reacted with the resulting intermediate to form polyol having amido and ester skeletons (these skeletons are formed by reaction of carboxyl group and alkylene oxide).

The aliphatic amine (c) used in the invention as another raw material is represented by the formula (I):

$$H_2 N - R \underline{\hspace{2cm}} (NH - R)_{\overline{n}} \underline{\hspace{2cm}} NH_2 \qquad ( I )$$

wherein R is an alkylene group having from 1 to 6 carbon atoms and n is O or an integer of 1 to 4.

Exemplary above aliphatic amine (c) suitable for use includes ethylenediamine; diethylenetriamine, triethylenetetramine, tetraethylenepentamine, and pentaethylenehexamine. These aliphatic amines can be used singly or as a mixture.

As mentioned above, the other polyol for use in the invention is prepared by the addition of 0.166 to 1.0 mole of the organic polycarboxylic acid or its anhydride and subsequently 1.0 to 3.0 moles of alkylene oxide to one of aliphatic amine (c) which contains from 2 to 6 primary and/or secondary amino groups in the molecule.

When the number of these primary and/or secondary amino groups is less than 2 in a molecule, the resulting polyurethane foam tends to lower foam strengths. On the other hand, the amino groups in excess of 6 in a molecule increases amido and ester bonds, and hence viscosity of resulting polyol goes up and gives adverse effect on the operation efficiency in the foaming operation.

When the amount of the organic polycarboxylic acid or its anhydride reacted is less than 0.166 mole per one of the primary and/or secondary amino groups, properties of the resulting polyurethane foam are liable to deteriorate, although the mixing and dispersing ability in HCFC-123, HCFC-141b and HFC is equivalent to conventional polyoxyalkylene polyol. On the other hand, the amount of the organic polycarboxylic acid or its anhydride exceeding 1.0 mole causes disadvantage that viscosity of polyol increases, the mixing and dispersing ability in HCFC decreases and the resulting polyurethane foam becomes brittle.

When the amount of alkylene oxide reacted is less than 1.0 mole per one of the primary and/or secondary amino groups, unreacted amino group and carboxyl groups remain after the reaction and reactivity with organic polyisocyanate tends to deteriorate. On the other hand, the amount exceeding 3.0 moles reduces viscosity of polyoxyalkylene polyol and the physical properties of resulting polyurethane foam tends to deteriorate, although the mixing and dispersing ability in HCFC-123, HCFC-141b and HFC improves.

The catalyst used for the addition reaction of the organic polycarboxylic acid or its anhydride and alkylen oxide to aliphatic amine (c) in the present invention is the same as used in the reaction of the polyhydric alcohol (a) and/or polyoxyalkylene polyol (b) described above.

The temperature and other reaction conditions employed for the preparation of polyol are also the same as above.

An alkanolamine (d) having a hydroxyl group in addition to the primary and/or secondary amino groups and represented by the formula (II) and the formula (III):

$H_2 N-R_1 OH$     (II)

$HN = (R_1 OH)_2$     (III)

wherein $R_1$ is an alkylene group having from 1 to 6 carbon atoms, can also be used in the process of the invention.

Exemplary alkanolamine (d) suitable for use in the invention includes monoethanolamine, diethanolamine, monoisopropanolamine, monobutanolamine and dihexanolamine.

The alkanolamine (d) can be reacted alone with the organic polycarboxylic acid or its anhydride, or this alkanolamine (d) is mixed with a single compound or more than two compounds selected from a group consists from polyhydric alcohol (a), polyoxyalkylene polyol (b) and aliphatic amine (c), and is reacted with the organic polycarboxylic acid or its an hydride to give a starting material. Above starting material is added and reacted with alkylene oxide to give a polyol.

The polyol of the present invention can be used singly or as a mixture with other polyols.

The amount of other polyols to be mixed is preferably from 0 to 70 parts by weight per 100 parts by weight of the total polyol.

Exemplary other polyols which are suitable for use are polyether polyols having a hydroxyl value of 200 to 800 mg KOH/g which are obtained by the addition polymerization of alkylene oxide to polyhydric alcohols and/or polyhydroxy compounds such as ethylene glycol, propylene glycol, diethylene glycol, triethylene glycol, dipropylene glycol, glycerin, trimethylol propane, 1, 3, 6-hexanetriol, pentaerythritol, sorbitol, sucrose, bisphenol A, novolak, hydroxylated 1,2-polybutadiene, and hydroxylated 1,4-polybutadiene; alkanol amines such as diethanolamine and triethanolamine; amines such as ethylenediamine, diethylenetriamine, ammonia, aniline, tolylenediamine, xylenediamine, diaminodiphenylmethane and other compounds containing at least two active hydrogen atoms. Suitable alkylene oxide for use in the preparation of these polyoxyalkylene polyols are ethylene oxide, propylene oxide, butyrene oxide and styrene oxide. Polytetramethylene ether glycol, polyester polyol prepared from polyhydric alcohol and organic polycarboxylic acid or its anhydride, and polycaprolactone copolyesterpolyol can also be used.

No particular restriction is imposed upon the organic polyisocyanate for use use in the process of the invention.

Conventionally known organic polyisocyanates, for example, aromatic, aliphatic and alicyclic polyisocyanates and their modified products can be used. Exemplary polyisocyanate which is suitable for use includes phenyldiisocyanate, diphenylmethane diisocyanate, crude diphenylmethane diisocyanate, tolylene diisocyanate, crude tolylene diisocyanate, xylylene diisocyanate, hexamethylene diisocyanate, isophorone diisocyanate, hydrogenated diphenylmethane diisocyanate, hydrogenated tolylene diisocyanate, triphenylmetane triisocyanate, tolylene triisocyanate, polymethylene-polyphenylpolyisocyanate, modified polyisocyanates such as carbodiimide modified diphenylmethane diisocyanate, and isocyanate terminated prepolymers which can be obtained by reacting the above polyisocyanate with the polyoxyalkylene polyol or polymer polyol in a NCO/active H equivalent ratio of from 2 to 20 and have an isocyanate content of from 5 to 35% by weight.

These polyisocyanates can be used singly or in combination.

The equivalent ratio of the polyisocyanate to the hydroxyl group in the resin premix is in the range of from 0.8 to 5.0. The equivalent ratio exceeding 5.0 leads to unreacted polyisocyanate remained. On the other hand, the equivalent ratio less than 0.8 results in unreacted polyoxyalkylene polyol remained. Hence the above range is preferable.

The foaming agent for use in the invention is hydrochlorofluorocarbons and hydrofluorocarbons.

Exemplary hydrochlorofluorocarbons include 2,2-dichloro-1,1,1-trifluoroethane (HCFC-123), 1,1-dichloro-1-fluoroethane (HCFC-141b) and monochlorodifluoromethane. Representative hydrofluorocarbons include 1,1,1,2-tetrafluoroethane and 1,1-difluoroethane. These foaming agents can be used singly or in combination. When necessary, water and/or low boiling point compound and other auxiliary foaming agent can be used in combination.

Water is usually used in an amount of from 0.5 to 5.0 parts by weight per 100 parts by weight of the resin premix. Exemplary low boiling point compound includes methylene chloride and other low boiling point hydrocarbons (boiling point is from 10 to 50 °C) and their mixtures. Conventional chlorofluorocarbons can also be used in combination.

The catalyst which can be used for the rigid polyurethane foam, preparation of the invention includes, for example, amine calalyst such as triethylamine, tripropylamine, triisopropanolamine, tributylamine, trioctylamine, hexadecyldimethylamine, N-methylmorpholine, N-ethylmorpholine, N-octadecylmorpholine, monoethanolamine, diethanolamine, triethanolamine, N-methyldiethanolamine, N,N-dimethylethanolamine, diethylenetriamine, N,N,N',N'-tet ramethylethylenediamine, N,N,N',N'-tetramethylpropylenediamine, N,N,N',N'-tetramethylbutanediamine, N,N,N',N'-tetramethyl-1,3-butanediamine, N,N,N',N'-tetramethylhexamethylenediamine, bis [2-(N,N-dimethylamino)ethyl] ether, N,N-dimethylbenzylamine, N,N-dimethylcyclohexylamine, N,N,N',N',N''-pentamethyldiethylenetriamine, triethylenediamine, formic acid and other acid salts of triethylenediamine oxyalkylene adducts of primary and secondary amines, aza ring compounds such as N,N-dialkylpiperazine, and various N,N',N''-trialkylaminoalkylhexahydrotriazines such as β-aminocarbonyl catalyst disclosed in Japanese TOKKO SHO 52-043517 (1977) and β-aminonitrile catalysts disclosed in Japanese TOKKO SHO 53-014279 (1978); and organometallic catalysts such as tin acetate, stannous octoate, stannous oleate, stannous laurate, dibutyltin diacetate, dibutyltin dilaurate, dibutyltin dichloride, lead octoate, lead naphthenate, nickel naphthenate and cobalt naphthenate.

These catalysts can be used singly or in combination. The amount of the catalyst for use is in the range of from 0.0001 to 10.0 parts by weight per 100 parts of the polyol.

The foam regulator for use in the present invention is a conventionally known organic silicone surfactant. Exemplary foam regulator include products of Nippon Unicar Co., Ltd. which are L-520, L-540, L-5340, L-5410, L-5420, L-5710, and -5720, products of Toray Silicone Co., Ltd. which are SH-190, SH-192, SH-193, SH-194, and SH-195, products of Shinetsu Silicone Co., Ltd. which are F-305, F-306, F-317, F-341 and F-345, and a product of Toshiba Silicone Co., Ltd. which is TFA-4200.

The amount of the cell regulator used is in the range of from 0.1 to 20 parts by weight per 100 parts by weight of the sum of the polyol and the organic polyisocyanate.

Flame retarding agents which can be used are tris(2-chloroethyl) phosphate, tris(dichlopropyl) phosphate, tris(dibromopropyl) phosphate, products of Daihachi Chemical Co., Ltd. which are CR-505 and CR-507, and a product of Akzo Japan Co., Ltd. which is Fyrol-6.

Other additives usually employed in polyurethane, for example, plasticizer, fillers, antioxidants, stabilizers, ultraviolet absorbers and calorants can also be added, if necessary.

In order to practice the present invention, the polyol, catalyst, cell regulator, flame retarding agent, foaming agent such as 1,1-dichloro-1-fluoraethane(HCFC-141b), 1,1-dichloro-2,2,2-trifluoroethane (HCFC-123), 1,1,1,2-tetrafluoroethane, 1,1-difluoroethane, monochlorodifluoromethane and other additives are mixed in a prescribed amount to foam a premix.

Using a polyurethane dispensing machine, the resin premix is rapidly and continuously mixed with the organic polyisocyanate at a constant ratio so as to obtain a NCO/active H equivalent ratio of from 0.8 to 5.0.

The mixture obtained is successively poured into a cavity or a mold. After pouring, liquid raw material of the rigid polyurethane foam is foamed and cured in a several minutes.

The rigid polyurethane foam obtained in the present invention is used for the heat-insulation material or structural material of refrigerators, heat-insulating panels, ships and vehicles.

Example

The present invention will hereinafter be illustrated further in detail by way of examples and comparative examples.

Example 1

To a $2\ell$ autoclave, 120 g of ethylenediamine and 200 g of succinic anhydride were charged. The internal atmosphere of the autoclave was replaced with nitrogen. The mixture was heated to 120 $^\circ$C , 1.7 g of triethylamine was added and mixed, and then 232 g of propylene oxide was gradually charged. After reacting for 3 hours, unreacted propylene oxide was removed from the reaction system. Polyol (polyol No. 1 in Table 2) thus obtained was 521 g and had a hydroxyl value of 586 mgKOH/g, viscosity of 35000 cp/25 $^\circ$C and an acid value of 0.1 mgKOH/g. Results are illustrated in Table 2.

(Polyurethane resin preparation)

12.00 g of the polyol thus obtained, organic polyisocyanate (MDI-CR, NCO% is 31.0, a product of Mitsui Toatsu Chemicals Inc.) and 0.12 g of Kaolizer No. 1 (amine catalyst, a product of Kao Co., Ltd.) were reacted at the room temperature by the formulation illustrated in Table 3, Table 7 and Table 8 and flon absorption of the polyurethane resin thus obtained were measured. Results are illustrated in the same tables.

(Rigid polyurethane foam preparation)

To 100 g of the polyol thus obtained, 1.0 g of water, 1.5 g of silicone surfactant L-5420 (a product of Nippon Unicar Co., Ltd.), 3.0 g of Kaolizer No. 1 (a product of Kao Co., Ltd.) and each amount of flon illustrated in Table 4 and Table 9 were added and mixed to obtain a premix. The premix thus obtained was mixed and reacted with each amount of polyisocyanate (MDI-CR, crude diphenylmethane diisocyanate, a product of Mitsui Toatsu Chemicals,Inc.) illustrated in the same tables at the room temperature and poured into a mold to prepare a rigid polyurethane foam.

In the step of preparing the resin premix, mixing and dispersing ability (operation efficiency) between flon and polyol was observed and closed cell content of rigid polyurethane foam were measured. Results are illustrated in the same tables.

Compositions and properties of polyols used in Comparative Examples are illustrated in Table 1.

7

Table 1

| Polyol No. | (1′) | (2′) |
|---|---|---|
| Polyhydric alcohol | glycerin | glicerin sucrose |
| Alkylene oxide | propylene oxide | propylene oxide |
| Hydroxyl value (mgKOH/g) | 450 | 450 |
| Viscosity (cp/25° C) | 480 | 8500 |

Examples 2-78 and Comparative Examples 1-24

Polyols were prepared by carrying out the same procedures as described in Example 1.

When a metal hydroxide was used as catalyst, reacted material was neutralized by acid.

And, autoclaves of 2 to 4ℓ were applied according to the volume of raw material.

Examples 2~33, Comparative Examples 1~12(Table 2~4) are related to the polyol obtained from aliphatic amines (c), Examples 34~78, Comparative Example 13~24 (Table 5~10) are related to the polyol obtained from polyhydric alcohols (a) or polyoxyalkylenepolyol (b).

As illustrated in Table 1 to Table 10, the polyols obtained by the process of the present invention can maintain, even in the foaming system using hydrochlorofluorocarbons (for example, HCFC-123, HCFC-141b) or hydrofluorocarbons (for example HFC-134b) as a foaming agent, operation efficiency in premix preparation and rigid polyurethane foam properties equivalent to those of conventional polyurethane foaming system using chlorofluorocarbons.

EP 0 409 599 A2

Table 2

| | | Example | | | | | | | | | | | Comp. Example | | | |
|---|---|---|---|---|---|---|---|---|---|---|---|---|---|---|---|---|
| | | 1 | 2 | 3 | 4 | 5 | 6 | 7 | 8 | 9 | 10 | 11 | 1 | 2 | 3 | 4 |
| Polyol No. | | (1) | (2) | (3) | (4) | (5) | (6) | (7) | (8) | (9) | (10) | (11) | (3′) | (4′) | (5′) | (6′) |
| Aliphatic amine (g) | | | | | | | | | | | | | | | | |
| Ethylenediamine | | 120 | | | | | | | | | | | | | | |
| Diethylenetriamine | | | 206 | 206 | 206 | | | | | 103 | 206 | 206 | 206 | 206 | 206 | 206 |
| Triethylenetetramine | | | | | | 292 | 292 | | | | | | | | | |
| Pentaethylenehexamine | | | | | | | | 464 | 464 | | | | | | | |
| PCAA (g) | | | | | | | | | | | | | | | | |
| Succinic anhydride | | 200 | 200 | 200 | 200 | 200 | 200 | 200 | 200 | 300 | 200 | | 200 | 600 | 60 | 200 |
| Phthalic anhydride | | | | | | | | | | | | 296 | | | | |
| Calalyst (g) | | | | | | | | | | | | | | | | |
| Triethylamine | | 1.7 | 2.3 | 3.3 | 2.2 | 2.8 | 2.8 | | 3.0 | 1.4 | 2.8 | 3.6 | 1.6 | 3.6 | 1.8 | 2.7 |
| Dimethylethanolamine | | | | | | | | 4.1 | | | | | | | | |
| KOH | | | | 2.2 | | 2.8 | | | 3.0 | 1.4 | | | | | | 2.7 |
| Alkylene Oxide (g) | | | | | | | | | | | | | | | | |
| Propylene oxide | | 232 | 348 | 696 | 1044 | 464 | 1392 | 696 | 1392 | 522 | | 696 | 116 | 116 | 348 | 1392 |
| Ethylene oxide | | | | | | | | | | | 528 | | | | | |
| Yield (g) | | 521 | 710 | 1047 | 1380 | 883 | 1780 | 1293 | 1874 | 898 | 870 | 1070 | 512 | 897 | 547 | 1620 |
| Note: | | | | | | | | | | | | | | | | |
| Comp. Example: Comparative Example | | | | | | | | | | | | | | | | |
| PCAA : Polycarboxylic acid anhydride | | | | | | | | | | | | | | | | |

9

Table 3 (Polyurethane Resin)

| | Example | | | | | | | | | | | Comp. Example | | | |
|---|---|---|---|---|---|---|---|---|---|---|---|---|---|---|---|
| | 12 | 13 | 14 | 15 | 16 | 17 | 18 | 19 | 20 | 21 | 22 | 5 | 6 | 7 | 8 |
| Polyol No. | (1) | (2) | (3) | (4) | (5) | (6) | (7) | (8) | (9) | (10) | (11) | (3') | (4') | (5') | (6') |
| OH-Value (mgKOH/g) | 586 | 555 | 382 | 291 | 587 | 284 | 545 | 373 | 170 | 451 | 351 | 681 | 297 | 709 | 215 |
| Viscosity (cp/25℃) | 35000 | 33000 | 28000 | 15000 | 38000 | 850 | 39000 | 11000 | 5600 | 9800 | 34000 | 7300 | 189000 | 13100 | 5300 |
| Acid value (mgKOH/g) | 0.1 | 0.2 | 0.0 | 0.0 | 0.2 | 0.0 | 0.1 | 0.0 | 0.0 | 0.2 | 0.2 | 101 | 57 | 0.0 | 0.0 |
| Resin formulation (g) | | | | | | | | | | | | | | | |
|   Polyol | 12.00 | 12.00 | 12.00 | 12.00 | 12.00 | 12.00 | 12.00 | 12.00 | 12.00 | 12.00 | 12.00 | 12.00 | 12.00 | 12.00 | 12.00 |
|   MDI-CR | 17.07 | 16.17 | 11.13 | 8.48 | 17.09 | 8.27 | 15.87 | 10.86 | 4.95 | 13.14 | 10.22 | 22.78 | 10.31 | 20.05 | 6.26 |
|   Kaolizer No.1 | 0.12 | 0.12 | 0.12 | 0.12 | 0.12 | 0.12 | 0.12 | 0.12 | 0.12 | 0.12 | 0.12 | 0.12 | 0.12 | 0.12 | 0.12 |
| Flon absorption | | | | | | | | | | | | | | | |
|   CFC-11 | | | | | | | | | | | | | | | |
|     0 hour | 29.19 | 28.29 | 23.25 | 20.60 | 29.21 | 20.39 | 27.99 | 22.98 | 17.07 | 25.26 | 22.34 | 34.90 | 22.43 | 32.17 | 18.38 |
|     24 hours | 29.19 | 28.29 | 23.25 | 20.60 | 29.21 | 20.39 | 27.99 | 22.98 | 17.07 | 25.26 | 22.34 | * | * | 32.19 | 18.40 |
|     Absorption (%) | 0.0 | 0.0 | 0.0 | 0.0 | 0.0 | 0.0 | 0.0 | 0.0 | 0.0 | 0.0 | 0.0 | * | * | 0.06 | 0.1 |
|   HCFC-123 | | | | | | | | | | | | | | | |
|     0 hour | 29.19 | 28.29 | 23.25 | 20.60 | 29.21 | 20.39 | 27.99 | 22.98 | 17.07 | 25.26 | 22.34 | 34.90 | 22.43 | 32.17 | 18.38 |
|     24 hours | 29.20 | 28.29 | 23.27 | 20.60 | 29.21 | 20.40 | 27.99 | 22.98 | 17.09 | 25.26 | 22.35 | * | * | 32.85 | 18.63 |
|     Absorption (%) | 0.03 | 0.0 | 0.1 | 0.0 | 0.0 | 0.05 | 0.0 | 0.0 | 0.1 | 0.0 | 0.04 | * | * | 2.1 | 1.4 |
|   HCFC-141b | | | | | | | | | | | | | | | |
|     0 hour | 29.19 | 28.29 | 23.25 | 20.60 | 29.21 | 20.39 | 27.99 | 22.98 | 17.07 | 25.26 | 22.34 | 34.90 | 22.43 | 32.17 | 18.38 |
|     24 hours | 29.20 | 28.29 | 23.26 | 20.60 | 29.22 | 20.40 | 28.01 | 22.98 | 17.08 | 25.27 | 22.36 | * | * | 32.50 | 18.62 |
|     Absorption (%) | 0.03 | 0.0 | 0.04 | 0.0 | 0.03 | 0.05 | 0.07 | 0.0 | 0.06 | 0.04 | 0.09 | * | * | 1.0 | 1.3 |

Note: * : Resin obtained was brittle. data could not be obtained.
OH-Value : JIS K1557
Viscosity : 〃
Acid value: 〃
Kaolizer No. 1: Amine base catalyst (product of Kao comp.)

Flon absorption : Resin of 10 g was dipped in Flon of 100 g and weight increase of the resin after 24 hours was measured.

MDI-CR : Crude diphenylmethane diisocyanate (Product of Mitsui Toatsu Chemicals, Inc.)

EP 0 409 599 A2

Table 4

| | Example | | | | | | | | | | | Comp. Example | | | |
|---|---|---|---|---|---|---|---|---|---|---|---|---|---|---|---|
| (Polyurethane Foam) | | | | | | | | | | | | | | | |
| | 23 | 24 | 25 | 26 | 27 | 28 | 29 | 30 | 31 | 32 | 33 | 9 | 10 | 11 | 12 |
| Polyol No. | (1) | (2) | (3) | (4) | (5) | (6) | (7) | (8) | (9) | (10) | (11) | (3$'$) | (4$'$) | (5$'$) | (6$'$) |
| OH-Value (mgKOH/g) | 586 | 555 | 382 | 291 | 587 | 284 | 545 | 373 | 170 | 451 | 351 | 681 | 297 | 709 | 215 |
| Viscosity (cp/25°C) | 35000 | 33000 | 28000 | 15000 | 38000 | 850 | 39000 | 11000 | 5600 | 9800 | 34000 | 7300 | 189000 | 13100 | 5300 |
| Acid value (mgKOH/g) | 0.1 | 0.2 | 0.0 | 0.0 | 0.2 | 0.0 | 0.1 | 0.0 | 0.0 | 0.2 | 0.2 | 101 | 57 | 0.0 | 0.0 |
| Foam formuration (g) | | | | | | | | | | | | | | | |
| Polyol | 100.0 | | | | | | | | | | | | | | |
| $H_2O$ | 1.0 | | | | | | | | | | | | | | |
| L-5420 | 1.5 | | | | | | | | | | | | | | |
| Kaolizer No.1 | 3.0 | | | | | | | | | | | | | | |
| Flon | 33 | 31 | 26 | 23 | 33 | 23 | 31 | 26 | 19 | 28 | 25 | 36 | 23 | 36 | 21 |
| MDI-CR | 171 | 162 | 117 | 93 | 171 | 91 | 160 | 115 | 61 | 135 | 109 | 196 | 95 | 203 | 73 |
| Operation efficiency | All | | | | | | | | | | | | | | |
| CFC-11 | good | | | | | | | | | | | | | | |
| HCFC-123 | | | | | | | | | | | | | | | |
| HCFC-141b | | | | | | | | | | | | | | | |
| Closed cell content (%) | | | | | | | | | | | | | | | |
| CFC-11 | 88.5 | 88.8 | 88.2 | 88.6 | 88.6 | 88.5 | 87.9 | 89.5 | 88.5 | 87.5 | 89.1 | Unmeasurable | | | |
| HCFC-123 | 85.9 | 85.1 | 85.4 | 85.6 | 85.7 | 86.2 | 85.1 | 86.4 | 84.2 | 84.0 | 87.5 | | | | |
| HCFC-141b | 86.1 | 86.7 | 86.5 | 85.1 | 86.9 | 87.5 | 85.8 | 86.9 | 85.3 | 86.1 | 88.2 | | | | |
| Note: | | | | | | | | | | | | | | | |
| L-5420 : Silicon foam regulator (Product of Nihon-Unicar Ltd.) | | | | | | | | | | | | | | | |
| Closed cell content : Beckmann air comparison hydrometer ( made of TOSHIBA Comp.). (ASTM D-2856) | | | | | | | | | | | | | | | |

EP 0 409 599 A2

Table 5

| | | Example | | | | | | | | | | | | | |
|---|---|---|---|---|---|---|---|---|---|---|---|---|---|---|---|
| | | 34 | 35 | 36 | 37 | 38 | 39 | 40 | 41 | 42 | 43 | 44 | 45 | 46 | 47 | 48 |
| Polyol No. | | (12) | (13) | (14) | (15) | (16) | (17) | (18) | (19) | (20) | (21) | (22) | (23) | (24) | (25) | (26) |
| Raw Material (g) | | | | | | | | | | | | | | | | |
| Glycerin base polyol(A) | | 731 | 531 | 376 | 281 | | | | | 632 | 765 | | | | 185 | |
| Sorbitol base polyol | | | | | | | 1124 | | | | | | | | | |
| Surose base polyol | | | | | | | | 1233 | 804 | | | | | | | |
| Triethanolamine | | | | | | 526 | | | | | | | | | | |
| Glycerin base polyol(B) | | | | | | | | | | | | 369 | | 185 | 255 | |
| Aromatic amine base polyol | | | | | | | | | | | | | | | | 50 |
| Diethanolamine | | | | | | | | | | | | 421 | 213 | (PolyolNo.22) 50 | |
| PCAA (g) | | | | | | | | | | | | | | | | .. |
| Succinic angydride | | 487 | 354 | 251 | 564 | 355 | 238 | 169 | 441 | | 510 | | | | | |
| Phthalic anhydride | | | | | | | | | | 624 | | 297 | 297 | 297 | 297 | |
| Catalyst (g) | | | | | | | | | | | | | | | | |
| Triethylamine | | 2.2 | 4.5 | 2.2 | 2.2 | 2.2 | 2.2 | | 2.2 | 2.2 | 2.2 | 4.5 | 4.5 | 4.5 | 4.5 | 4.5 |
| Dimethylethanolamine | | | | | | | | 2.2 | | | | | | | | |
| KOH | | 2.2 | | 2.2 | 2.2 | 2.2 | 2.2 | 2.2 | 2.2 | 2.2 | 2.2 | | | | | |
| Alkylene Oxide (g) | | | | | | | | | | | | | | | | |
| Propylene oxide | | 2538 | 616 | 872 | 654 | 618 | 828 | 784 | 1024 | 976 | | 834 | 782 | 810 | 718 | |
| Ethylene oxide | | | | | | | | | | | 672 | | | | | |
| Yield (g) | | 3721 | 1475 | 1481 | 1463 | 1479 | 2050 | 2090 | 2110 | 2150 | 1890 | 1472 | 1475 | 1471 | 1432 | |

Note: PCAA : Polycaroxylic acid anhydride

EP 0 409 599 A2

Table 6

| | Comp. Example | | | |
|---|---|---|---|---|
| | 13 | 14 | 15 | 16 |
| Polyol No. | $(7')$ | $(8')$ | $(8')$ | $(9')$ |
| Raw Material (g) | | | | |
| Glycerin base polyol(A) | 806 | 443 | 1032 | 262 |
| Sorbitol base polyol | | | | |
| Surose base polyol | | | | |
| Triethanolamine | | | | |
| Glycelin base polyol(B) | | | | |
| Aromatic amine base polyol | | | | |
| Diethanolamine | | | | |
| PCAA (g) | | | | |
| Succinic anhydride | 538 | 886 | 69 | 175 |
| Phthanic anhydride | | | | |
| Calalyst (g) | | | | |
| Triethylamine | 4.5 | 4.5 | 4.5 | 2.2 |
| Dimethylethanolamine | | | | |
| KOH | | | | 2.2 |
| Alkylene Oxide (g) | | | | |
| Propylene oxide | 156 | 171 | 399 | 1063 |
| Ethylene oxide | | | | |
| Yield (g) | 1461 | 1488 | 1470 | 1469 |
| Note: PCAA : Polycaroxylic acid anhydride | | | | |

Table 7

| | Example | | | | | | | | | | | | | | |
|---|---|---|---|---|---|---|---|---|---|---|---|---|---|---|---|
| (Polyurethane Resin) | | | | | | | | | | | | | | | |
| | 49 | 50 | 51 | 52 | 53 | 54 | 55 | 56 | 57 | 58 | 59 | 60 | 61 | 62 | 63 |
| Polyol No. | (12) | (13) | (14) | (15) | (16) | (17) | (18) | (19) | (20) | (21) | (22) | (23) | (24) | (25) | (26) |
| OH-Value (mgKOH/g) | 397 | 363 | 236 | 202 | 365 | 366 | 347 | 255 | 357 | 440 | 451 | 478 | 450 | 461 | 460 |
| Viscosity (cp/25°C) | 1400 | 810 | 630 | 17300 | 17000 | 21000 | 22000 | 36000 | 11000 | 1000 | 5100 | 5080 | 6200 | 8000 | 10000 |
| Acid value (mgKOH/g) | 0.1 | 0.0 | 0.0 | 0.0 | 0.1 | 0.1 | 0.0 | 0.1 | 0.1 | 0.0 | 0.0 | 0.0 | 0.0 | 0.0 | 0.0 |
| Resin formulation (g) | | | | | | | | | | | | | | | |
| Polyol | 12.00 | 12.00 | 12.00 | 12.00 | 12.00 | 12.00 | 12.00 | 12.00 | 12.00 | 12.00 | 12.00 | 12.00 | 12.00 | 12.00 | 12.00 |
| MDI-CR | 12.72 | 10.57 | 6.87 | 5.88 | 10.63 | 11.73 | 11.12 | 8.17 | 11.44 | 14.10 | 14.45 | 15.31 | 14.42 | 14.77 | 14.74 |
| Kaolizer No.1 | 0.12 | 0.12 | 0.12 | 0.12 | 0.12 | 0.12 | 0.12 | 0.12 | 0.12 | 0.12 | 0.12 | 0.12 | 0.12 | 0.12 | 0.12 |
| Flon Absorption | | | | | | | | | | | | | | | |
| CFC-11 | | | | | | | | | | | | | | | |
| 0 hour | 24.84 | 22.69 | 18.99 | 18.00 | 22.75 | 23.85 | 23.24 | 20.29 | 23.56 | 26.22 | 26.57 | 27.43 | 26.54 | 26.89 | 26.86 |
| 24 hours | 24.84 | 22.69 | 18.99 | 18.01 | 22.75 | 23.85 | 23.24 | 20.29 | 23.56 | 26.22 | 26.57 | 27.43 | 26.54 | 26.89 | 26.86 |
| Absorption (%) | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 |
| HCFC-123 | | | | | | | | | | | | | | | |
| 0 hour | 24.84 | 22.69 | 18.99 | 18.00 | 22.75 | 23.85 | 23.24 | 20.29 | 23.56 | 26.22 | 26.57 | 27.43 | 26.54 | 26.89 | 26.86 |
| 24 hours | 24.84 | 22.69 | 19.00 | 18.01 | 22.75 | 23.85 | 23.24 | 20.29 | 23.56 | 26.22 | 26.59 | 27.46 | 26.55 | 26.90 | 26.88 |
| Absorption (%) | 0.0 | 0.0 | 0.05 | 0.0 | 0.0 | 0.0 | 0.0 | 0.0 | 0.0 | 0.0 | 0.08 | 0.11 | 0.04 | 0.04 | 0.07 |
| HCFC-141b | | | | | | | | | | | | | | | |
| 0 hour | 24.84 | 22.69 | 18.99 | 18.00 | 22.75 | 23.85 | 23.24 | 20.29 | 23.56 | 26.22 | 26.57 | 27.43 | 26.54 | 26.89 | 26.86 |
| 24 hours | 24.84 | 22.69 | 18.99 | 18.00 | 22.75 | 23.85 | 23.24 | 20.29 | 23.56 | 26.22 | 26.59 | 27.45 | 26.55 | 26.91 | 26.87 |
| Absorption (%) | 0.0 | 0.0 | 0.0 | 0.0 | 0.0 | 0.0 | 0.0 | 0.0 | 0.0 | 0.0 | 0.08 | 0.07 | 0.04 | 0.07 | 0.04 |

Table 8

| (Polyurethane Resin) | | | | |
|---|---|---|---|---|
| | Comp. Example | | | |
| | 17 | 18 | 19 | 20 |
| Polyol No. | (7′) | (8′) | (9′) | (10′) |
| HO-value (mgKOH/g) | 321 | 155 | 685 | 171 |
| Viscosity (cp/25°C) | 2100 | 7160 | 980 | 480 |
| Acid value (mgKOH/g) | 256 | 186 | 0.0 | 0.0 |
| Resin formuration (g) | | | | |
| Polyol | 12.00 | 12.00 | 12.00 | 12.00 |
| MDI-CR | 16.81 | 9.93 | 19.95 | 4.98 |
| Kaolizer No.1 | 0.12 | 0.12 | 0.12 | 0.12 |
| Flon Absorption | | | | |
| CFC-11 | | | | |
| 0 hour | 28.93 | 22.05 | 32.07 | 17.10 |
| 24 hours | ‡ | ‡ | 32.09 | 17.10 |
| Absorption (%) | ‡ | ‡ | 0.1 | 0.0 |
| HCFC-123 | | | | |
| 0 hour | 28.93 | 22.05 | 32.07 | 17.10 |
| 24 hours | ‡ | ‡ | 32.89 | 17.86 |
| Absorption (%) | ‡ | ‡ | 2.6 | 4.4 |
| HCFC-141b | | | | |
| 0 hour | 28.93 | 22.05 | 32.07 | 17.10 |
| 24 hours | ‡ | ‡ | 32.55 | 17.60 |
| Absorption (%) | ‡ | ‡ | 1.5 | 2.9 |

Note : ‡ Resin obtained was dissolved in flon, data could not be obtained

Table 9

| | Example | | | | | | | | | | | | | | |
|---|---|---|---|---|---|---|---|---|---|---|---|---|---|---|---|
| (Polyurethane Foam) | | | | | | | | | | | | | | | |
| | 64 | 65 | 66 | 67 | 68 | 69 | 70 | 71 | 72 | 73 | 74 | 75 | 76 | 77 | 78 |
| Polyol No. | (12) | (13) | (14) | (15) | (16) | (17) | (18) | (19) | (20) | (21) | (22) | (23) | (24) | (25) | (26) |
| OH-value (mgKOH/g) | 397 | 363 | 236 | 202 | 365 | 366 | 347 | 255 | 357 | 440 | 451 | 478 | 450 | 461 | 460 |
| Viscosity (cp/25°C) | 1400 | 810 | 630 | 17300 | 17000 | 21000 | 22000 | 36000 | 11000 | 1000 | 5100 | 5080 | 6200 | 8000 | 10000 |
| Acid value (mgKOH/g) | 0.1 | 0.0 | 0.0 | 0.0 | 0.1 | 0.1 | 0.0 | 0.1 | 0.1 | 0.0 | 0.0 | 0.0 | 0.0 | 0.0 | 0.0 |
| Foam formulation (g) | | | | | | | | | | | | | | | |
| Polyol | 100.0 | | | | | | | | | | | | | | |
| $H_2O$ | 1.0 | | | | | | | | | | | | | | |
| L-5420 | 1.5 | | | | | | | | | | | | | | |
| Kaolizer No.1 | 3.0 | | | | | | | | | | | | | | |
| Flon | 27 | 25 | 21 | 20 | 25 | 26 | 25 | 22 | 25 | 28 | 28 | 29 | 28 | 29 | 28 |
| MDI-CR | 121 | 112 | 78 | 70 | 112 | 113 | 108 | 83 | 110 | 132 | 135 | 142 | 135 | 138 | 137 |
| Operation efficiency | All | | | | | | | | | | | | | | |
| CFC-11 | good | | | | | | | | | | | | | | |
| HCFC-123 | | | | | | | | | | | | | | | |
| HCFC-141b | | | | | | | | | | | | | | | |
| Closed Cell (%) | | | | | | | | | | | | | | | |
| CFC-11 | 88.6 | 88.5 | 87.9 | 88.3 | 88.2 | 88.1 | 87.6 | 89.8 | 88.9 | 87.3 | 89.0 | 88.7 | 88.1 | 87.9 | 87.2 |
| HCFC-123 | 85.6 | 85.2 | 85.6 | 84.6 | 85.1 | 85.3 | 84.2 | 85.0 | 83.2 | 84.3 | 88.7 | 88.5 | 87.8 | 87.5 | 87.1 |
| HCFC-141b | 86.3 | 86.1 | 86.5 | 85.0 | 86.2 | 86.4 | 85.0 | 86.3 | 84.5 | 85.9 | 88.6 | 88.4 | 87.9 | 87.6 | 87.0 |

Table 10

| (Polyurethane Foam) | | | | |
|---|---|---|---|---|
| | Comp. Example | | | |
| | 21 | 22 | 23 | 24 |
| Polyol No. | (7') | (8') | (9') | (10') |
| HO-value (mgKOH/g) | 321 | 155 | 685 | 171 |
| Viscosity (cp/25°C) | 2100 | 7160 | 980 | 480 |
| Acid value (mgKOH/g) | 256 | 186 | 0.0 | 0.0 |
| Foam formuration (g) | | | | |
| Polyol | 100.0 | | | |
| $H_2O$ | 1.0 | | | |
| L-5420 | 1.5 | | | |
| Kaolizer No.1 | 3.0 | | | |
| Flon | 24 | 19 | 36 | 19 |
| MDI-CR | 101 | 57 | 197 | 61 |
| Operation efficiency | All | | | |
| CFC-11 | good | | | |
| HCFC-123 | | | | |
| HCFC-141b | | | | |
| Closed Cell Content (%) | Unmeasurable | | | |
| CFC-11 | | | | |
| HCFC-123 | | | | |
| HCFC-141b | | | | |

[Preparation of rigid polyurethane foam (Tables 11-14)]

Rigid polyurethane foams were prepared by the following procedures and physical properties examined.

Each resin premix was prepared according to the formulations illustrated in Tables 11-14, and rapidly mixed for 6 seconds at a rate of 5000 rpm with the prescribed amount of an organic polyisocyanate illustrated in the above tables. The mixture thus obtained was immediately poured into vertical wooden boxes having dimensions of 200 ×200×200mm and 300 ×300×35mm (thickness), respectively.

The rigid polyurethane foam obtained in the former box was used for measuring density, compressive strength and dimensional stability. The foam obtained in the latter box was used for measuring thermal conductivity.

Preparation of prepolymer

Polyol No. 1′: Polyoxyalkylene polyol obtained by adding propylene oxide to glycerin. Hydroxyl value is 450 mgKOH/g. Viscosity is 480 cp/25 °C.

TRC-90A: Crude tolylene diisocyanate having NCO content of 39.0 % by weight.

Preparation of mixed prepolymers:

A mixture of 890 g of TRC-90A and 110 g of Polyol No.1′ was heated at 80 °C for 2 hours and then cooled to the room temperature. The reaction mixture obtained was mixed with 1000 g of MDI-CR to obtain mixed prepolymer. NCO content was 31.0 %.

Table II Example and Comparative Example

| | Comp. Ex. | Example | | Comp. Ex. | Example | | Comp. Ex. | Example | | Comp. Ex. | Example | | Comp. Ex. | Example | |
|---|---|---|---|---|---|---|---|---|---|---|---|---|---|---|---|
| | 25 | 79 | 80 | 26 | 81 | 82 | 27 | 83 | 84 | 28 | 85 | 86 | 29 | 87 | 88 |
| Formulation (g) | | | | | | | | | | | | | | | |
| MDI-CR | 172 | | | 181 | | | 170 | | | 145 | | | 118 | | |
| Polyol (2) (Table 2) | 100 | | | | | | | | | | | | | | |
| Polyol (5) (Table 2) | | | | 100 | | | | | | | | | | | |
| Polyol (7) (Table 2) | | | | | | | 100 | | | | | | | | |
| Polyol (10) (Table 2) | | | | | | | | | | 100 | | | | | |
| Polyol (11) (Table 2) | | | | | | | | | | | | | 100 | | |
| H$_2$O | 1.5 | | | 1.5 | | | 1.5 | | | 1.5 | | | 1.5 | | |
| L-5420 | 1.5 | | | 1.5 | | | 1.5 | | | 1.5 | | | 1.5 | | |
| Kaolizer No. 1 | 0.2 | | | 0.2 | | | 0.4 | | | 0.2 | | | 0.3 | | |
| Foaming agent | | | | | | | | | | | | | | | |
| CFC-11 | 41 | | | 42 | | | 41 | | | 37 | | | 33 | | |
| HCFC-141b | | 35 | | | 37 | | | 35 | | | 32 | | | 28 | |
| HCFC-123 | | | 49 | | | 51 | | | 49 | | | 44 | | | 39 |
| HFC-134a | | | | | | | | | | | | | | | |
| Isopentane | | | | | | | | | | | | | | | |
| Foam property | | | | | | | | | | | | | | | |
| Density. Free foaming [1] (Kg/m³) | 25.5 | 25.8 | 25.9 | 25.3 | 25.5 | 25.8 | 25.0 | 24.8 | 25.2 | 25.5 | 25.1 | 25.5 | 24.4 | 24.5 | 25.5 |
| Compressive strength [1] (Kg/m²) | 1.83 | 1.65 | 1.66 | 1.51 | 1.45 | 1.44 | 1.70 | 1.65 | 1.62 | 1.50 | 1.30 | 1.25 | 1.81 | 1.61 | 1.65 |
| Dimension stability [1] (%. -30℃ × 24Hr) | -0.4 | -0.9 | -1.5 | -0.6 | -1.8 | -1.8 | -0.4 | -0.9 | -1.3 | -0.2 | -0.4 | -1.0 | -0.2 | -0.8 | -0.7 |
| Thermal Conductivity [2] (Kcal/m.hr.℃) | 0.0159 | 0.0163 | 0.0161 | 0.0165 | 0.0167 | 0.0168 | 0.0161 | 0.0163 | 0.0163 | 0.0163 | 0.0165 | 0.0167 | 0.0160 | 0.0161 | 0.0164 |

Note: [1] In accordance with JIS A 9514

[2] In accordance with JIS A 1412

Table 12

19

| | Example and Comparative Example | | | | | | | | | | | |
|---|---|---|---|---|---|---|---|---|---|---|---|---|
| | Comp. Ex. | Example | | Comp. Ex. | Example | | Comp. Ex. | Example | | Comp. Ex. | Example | |
| | 30 | 89 | 90 | 31 | 91 | 92 | 32 | 93 | 94 | 33 | 95 | 96 |
| Formulation (g) | | | | | | | | | | | | |
| MDI-CR | | | | 150 | 150 | 150 | 145 | 145 | 145 | 145 | 145 | 145 |
| Mixed prepolymer | 145 | 145 | 145 | | | | | | | | | |
| Polyol (2) | | | | | | | | | | | | |
| Polyol (5) | | | | | | | | | | | | |
| Polyol (7) | | | | | | | | | | | | |
| Polyol (10) | 100 | 100 | 100 | | | | 100 | 100 | 100 | 100 | 100 | 100 |
| Polyol (11) | | | | | | | | | | | | |
| Polyol (23) (Table 5) | | | | 100 | 100 | 100 | | | | | | |
| $H_2O$ | 1.5 | 1.5 | 1.5 | 1.5 | 1.5 | 1.5 | 1.5 | 1.5 | 1.5 | 1.5 | 1.5 | 1.5 |
| L-5420 | 1.5 | 1.5 | 1.5 | 1.5 | 1.5 | 1.5 | 1.5 | 1.5 | 1.5 | 1.5 | 1.5 | 1.5 |
| Kaolizer No. 1 | 0.2 | 0.2 | 0.2 | 0.8 | 0.8 | 0.8 | 0.2 | 0.2 | 0.2 | 0.2 | 0.2 | 0.2 |
| Foaming agent | | | | | | | | | | | | |
| CFC-11 | 37 | | | 38 | | | 37 | | | 37 | | |
| HCFC-141b | | 32 | | | 33 | | | 32 | | | 32 | |
| HCFC-123 | | | 44 | | | 45 | | | 40 | | | 40 |
| HFC-134a | | | | | | | | | 3 | | | |
| Isopentane | | | | | | | | | | | | 4 |
| Foam property | | | | | | | | | | | | |
| Density, Free foaming ($Kg/m^3$) | 24.5 | 24.8 | 25.2 | 24.8 | 25.3 | 25.5 | 25.0 | 25.1 | 25.3 | 25.0 | 25.1 | 25.2 |
| Compressive strength ($Kg/m^2$) | 1.51 | 1.32 | 1.26 | 1.50 | 1.32 | 1.27 | 1.50 | 1.30 | 1.24 | 1.50 | 1.30 | 1.20 |
| Dimension stability (%, -30 $^\circ$C × 24Hr) | -0.1 | -0.3 | -0.8 | -0.2 | -0.3 | -0.5 | -0.2 | -0.4 | -1.0 | -0.2 | -0.4 | -1.0 |
| Thermal Conductivity (Kcal/m. hr. $^\circ$C) | 0.0158 | 0.0159 | 0.0161 | 0.0160 | 0.0162 | 0.0164 | 0.0163 | 0.0165 | 0.0167 | 0.0163 | 0.0165 | 0.0167 |

Table 13 Example and Comparative Example

| | Comp. Ex. | Example | | Comp. Ex. | Example | | Comp. Ex. | Example | | Comp. Ex. | Example | | Comp. Ex. | Example | |
|---|---|---|---|---|---|---|---|---|---|---|---|---|---|---|---|
| | 34 | 97 | 98 | 35 | 99 | 100 | 36 | 101 | 102 | 37 | 103 | 104 | 38 | 105 | 106 |
| Formulation (g) | | | | | | | | | | | | | | | |
| MDI-CR | | 161 | | | 122 | | | 121 | | | 116 | | | 119 | |
| Mixed prepolymer | | | | | | | | | | | | | | | |
| Polyol (12) (Table 5) | | 100 | | | | | | | | | | | | | |
| Polyol (16) (Table 5) | | | | | 100 | | | | | | | | | | |
| Polyol (17) (Table 5) | | | | | | | | 100 | | | | | | | |
| Polyol (18) (Table 5) | | | | | | | | | | | 100 | | | | |
| Polyol (20) (Table 5) | | | | | | | | | | | | | | 100 | |
| Polyol (21) (Table 5) | | | | | | | | | | | | | | | |
| $H_2O$ | | 1.5 | | | 1.5 | | | 1.5 | | | 1.5 | | | 1.5 | |
| L-5420 | | 1.5 | | | 1.5 | | | 1.5 | | | 1.5 | | | 1.5 | |
| Kaolizer No. 1 | | 1.8 | | | 0.2 | | | 2.2 | | | 2.0 | | | 1.5 | |
| Foaming agent | | | | | | | | | | | | | | | |
| CFC-11 | 39 | | | 33 | | | 33 | | | 32 | | | 33 | | |
| HCFC-141b | | 33 | | | 28 | | | 28 | | | 28 | | | 28 | |
| HCFC-123 | | | 47 | | | 40 | | | 40 | | | 39 | | | 39 |
| Foam property | | | | | | | | | | | | | | | |
| Density. Free foaming (Kg/m³) | 25.0 | 25.3 | 25.4 | 24.8 | 25.0 | 25.1 | 25.0 | 25.0 | 25.2 | 24.6 | 24.7 | 25.2 | 24.4 | 24.5 | 25.0 |
| Compressive strength (Kg/m²) | 1.55 | 1.38 | 1.30 | 1.30 | 1.15 | 1.18 | 1.65 | 1.40 | 1.38 | 1.50 | 1.25 | 1.19 | 1.51 | 1.21 | 1.20 |
| Dimension stability (%. -30℃ × 24Hr) | -0.8 | -1.5 | -0.8 | -0.6 | -1.8 | -2.0 | -0.4 | -1.0 | -1.5 | -0.2 | -0.8 | -1.0 | -0.2 | -0.7 | -0.6 |
| Thermal Conductivity (Kcal/m. hr. ℃) | 0.0161 | 0.0165 | 0.0163 | 0.0168 | 0.0170 | 0.0171 | 0.0163 | 0.0165 | 0.0165 | 0.0165 | 0.0168 | 0.0170 | 0.0161 | 0.0162 | 0.0165 |

Table 13   Example and Comparative Example (continued)

| | Comp. Ex. | Example | | Comp. Ex. | Example | |
|---|---|---|---|---|---|---|
| | 39 | 107 | 108 | 40 | 109 | 110 |
| Formulation  (g) | | | | | | |
| MDI-CR | | 140 | | | | |
| Mixed prepolymer | | | | | 110 | |
| Polyol (12) (Table 5) | | | | | | |
| Polyol (16) (Table 5) | | | | | | |
| Polyol (17) (Table 5) | | | | | | |
| Polyol (18) (Table 5) | | | | | | |
| Polyol (20) (Table 5) | | | | | 100 | |
| Polyol (21) (Table 5) | | 100 | | | | |
| H₂O | | 1.5 | | | 1.5 | |
| L-5420 | | 1.5 | | | 1.5 | |
| Kaolizer No. 1 | | 1.6 | | | 1.6 | |
| Foaming agent | | | | | | |
| CFC-11 | 36 | | | 33 | | |
| HCFC-141b | | 31 | | | 28 | |
| HCFC-123 | | | 43 | | | 30 |
| Foam property | | | | | | |
| Density, Free foaming (Kg/m³) | 25.2 | 25.1 | 25.5 | 24.0 | 24.2 | 24.8 |
| Compressive strength (Kg/m²) | 1.61 | 1.40 | 1.38 | 1.51 | 1.20 | 1.20 |
| Dimension stability (%, -30℃ × 24Hr) | -0.1 | -1.0 | -1.2 | -0.1 | -0.8 | -0.8 |
| Thermal Conductivity (Kcal/m. hr. ℃) | 0.0162 | 0.0164 | 0.0165 | 0.0159 | 0.0160 | 0.0161 |

## Table 14

| | Comparative Example | | | | | |
|---|---|---|---|---|---|---|
| | 41 | 42 | 43 | 44 | 45 | 46 |
| Formulation (g) | | | | | | |
| MDI-CR | 144 | | | 144 | | |
| Polyol (1´)(Table 1) | 100 | | | | | |
| Polyol (2´)(Table 1) | | | | 100 | | |
| $H_2O$ | 1.5 | | | 1.5 | | |
| L-5420 | 1.5 | | | 1.5 | | |
| Kaolizer No.1 | 3.0 | | | 2.8 | | |
| Foaming agent | | | | | | |
| CFC-11 | 37 | | | 37 | | |
| HCFC-141b | | 30 | | | 30 | |
| HCFC-123 | | | 44 | | | 44 |
| Foam property | | | | | | |
| Density,Free foaming (Kg/m³ ) | 24.5 | 25.0 | 25.0 | 25.0 | 25.1 | 25.3 |
| Compressive strength (Kg/cm³ ) | 1.51 | 0.98 | 1.05 | 1.61 | 1.00 | 0.95 |
| Dimension stability (%,-30° C × 24hr) | -0.5 | -3.6 | -5.8 | -1.0 | -4.8 | -7.2 |
| Thermal Conductivity (Kcal/m.hr. ° C) | 0.0168 | 0.0179 | 0.0182 | 0.0165 | 0.0180 | 0.0183 |

(1) Preparation of rigid polyurethane foam composite having facing material

According to the above examples, preparation of a rigid polyurethane foam composite having facing material of the invention was carried out.

Polyols obtained in examples and comparative examples illustrated in Table 1, Table 2 and Table 5 were used as the raw material of rigid polyurethane foams.

The facing material for use in the invention includes corrugated paper boards, laminated papers and other paper products; polyethylene, polypropylene, polyvinyl chloride and other synthetic resin plates: and aluminum, steel and other metal plates.

1) Polyurethane foam composite having one facing material

The same formulations as illustrated in Table 15 were sprayed on a facing material under the following conditions to prepare a rigid polyurethane foam having one facing material.

Properties of the product obtained are summarized in Table 16.

Atomizer : Model - FF Head D Gum (a product of Gusmer Co., Ltd.)

Output pressure : 50 kg/ cm²

Liquid temperature : 40 ° C

Face material : Corrugated paper board

23

Table 15

| | Example | | | Comp. Example | | |
|---|---|---|---|---|---|---|
| | 111 | 112 | 113 | 47 | 48 | 49 |
| Formulation (g) | | | | | | |
| MDI-CR | 154 | 154 | 124 | 127 | 127 | 127 |
| Polyol (2) (Table 2) | 100 | 100 | | | | |
| Polyol (21) (Table 5) | | | 100 | | | |
| Polyol (1′) (Table 1) | | | | 100 | 100 | |
| Polyol (2′) (Table 1) | | | | | | 100 |
| **TCEP** | 10 | 10 | 10 | 10 | 10 | 10 |
| $H_2O$ | 0.5 | 0.5 | 0.5 | 0.5 | 0.5 | 0.5 |
| L-5420 | 1.5 | 1.5 | 1.5 | 1.5 | 1.5 | 1.5 |
| Kaolizer No. 1 | 1.5 | 1.5 | 3.0 | 5.0 | 5.0 | 5.0 |
| LL-690D | 0.1 | 0.1 | 0.1 | 0.1 | 0.1 | 0.1 |
| CFC-11 | | | | 19 | | |
| HCFC-141b | 33 | | | | 17 | |
| HCFC-123 | | 46 | 46 | | | 23 |
| Note: | | | | | | |
| TCEP : Flame ratardant, Tris(2-chloroethyl)phosphate, product of Daihachi Chemical Co. | | | | | | |
| LL-690D: Catalyst, solution of 40% by weight of lead octylate in dioctylphthalate | | | | | | |

Table 16

| | Example | | | Comp. Example | | |
|---|---|---|---|---|---|---|
| | 111 | 112 | 113 | 47 | 48 | 49 |
| Reactivity | | | | | | |
| Tack-free time (sec) | 4~5 | 4~5 | 4~5 | 5 | 5~6 | 5 |
| Sag phenomenon | no | no | no | no | found | found |
| Surface appearance | good | good | good | good | good | good |
| Adhesion | good | good | good | good | good | good |
| Foam density (Kg/m$^3$) | 36.5 | 37.0 | 37.0 | 38.0 | 39.0 | 39.0 |
| Compressive strength (Kg/m$^2$) | 3.33 | 3.35 | 3.25 | 3.25 | 3.10 | 2.95 |
| Thermal conductivity (Kcal/m.hr. °C) | 0.0175 | 0.0172 | 0.0176 | 0.0180 | 0.0190 | 0.0188 |
| Combustibility | | | | | | |
| Time burned (sec) | 23 | 24 | 23 | 24 | 35 | 33 |
| Distance burned (mm) | 18 | 17 | 18 | 19 | 20 | 21 |
| Note: | | | | | | |
| Sag phenomenon : Sag is a phenomenon where a raw material mixture before curing sags or runs down on a vertical surface when the mixture is sprayed to foam on the surface | | | | | | |
| Combustibility (Flame retardance): It is measured in accordance with ASTM D 1691. | | | | | | |

2) Preparation of rigid polyurethane foam having a plurality of facing material

In the test, rigid polyurethane foam composite boards having two facing materials were prepared with a continuous process under the following conditions by using the formulations illustrated in Table 17.

Foaming machine : High pressure foam dispensing machine Model-MQ (a product of Hennecke Machinen Bau)

Line speed : 10 m/min

Temperature : Material: 30 - 40 °C Cure oven: 55 °C

Product : 1 m Width × 40 mm Thickness 35 mm Foam layer

Facing material : Laminated paper on the top and bottom

surface Physical properties of the product are illustrated in Table 18.

Table 17

|  | | Example | | | Comp. Example | | |
|---|---|---|---|---|---|---|---|
|  | | 114 | 115 | 116 | 50 | 51 | 52 |
| Formulation (g) | | | | | | | |
| MDI-CR | | 145 | 145 | 118 | 144 | 144 | 144 |
| Polyol (10) (Table 2) | | 100 | 100 | | | | |
| Polyol (11) (Table 2) | | | | 100 | | | |
| Polyol (1′) (Table 1) | | | | | 100 | 100 | |
| Polyol (2′) (Table 1) | | | | | | | 100 |
| **TCEP** | | 10 | 10 | 10 | 10 | 10 | 10 |
| $H_2O$ | | 1.5 | 1.5 | 1.5 | 1.5 | 1.5 | 1.5 |
| L-5420 | | 1.5 | 1.5 | 1.5 | 1.5 | 1.5 | 1.5 |
| Kaolizer No. 1 | | 0.2 | 0.2 | 0.3 | 3.0 | 3.0 | 2.8 |
| CFC-11 | | | | | 37 | | |
| HCFC-141b | | 32 | | | | 30 | |
| HCFC-123 | | | 44 | 39 | | | 44 |

Table 18

|  | Example | | | Comp. Example | | |
|---|---|---|---|---|---|---|
|  | 114 | 115 | 116 | 50 | 51 | 52 |
| Formulation (Table 17) | 114 | 115 | 116 | 50 | 51 | 52 |
| Adhesion between face material and foam | good | good | good | good | good | good |
| Foam density (Kg/ m³ ) | 31.5 | 32.0 | 31.8 | 30.0 | 31.0 | 31.5 |
| Compressive strength (Kg/cm² ) | 1.53 | 1.50 | 1.60 | 1.55 | 1.05 | 1.00 |
| Flexural strength (Kg/cm² ) | 2.40 | 2.30 | 2.35 | 2.45 | 1.95 | 1.85 |
| Thermal conductivity (Kcal/m.hr.°C ) | 0.0170 | 0.0172 | 0.0173 | 0.0170 | 0.0185 | 0.0186 |
| Combustibility | | | | | | |
| Time burned (sec) | 22 | 21 | 21 | 23 | 30 | 31 |
| Distance burned (mm) | 16 | 14 | 15 | 16 | 21 | 20 |

As seen in these results, the polyols of the invention have suitable reactivity. Consequently, the mixture of foaming ingredients does not cause sagging phenomenon, even when it is sprayed on a vertical face material, and can give good appearance on the surface of spray applied foam. Good adhesion of sprayed foam to the face material can also be obtained. The rigid foam thus obtained has excellent flame retardance and low thermal conductivity, and thus provides composite boards having excellent performance.

The formulations used in the preparation of rigid polyurethane foam composites are illustrated in Table 15 and 17. However, the formulations are not limited to the above embodiment and it is to be understood that the formulations illustrated in Examples 1 to 110 can also be used for the preparation of polyurethane foam composites.

**Claims**

(1) A polyol prepared by a process comprising using a compound having at least one ester bond and/or amido bond in a molecule or a mixture thereof as a starting material and further adding an alkylene oxide, said compound being obtained by reacting an organic polycarboxylic acid or an anhydride thereof with a single compound or a mixture of the single compound selected from the group consisting of:

(a) a polyhydric alcohol having from 3 to 8 hydroxyl groups in a molecule,

(b) a polyoxyalkylene polyol having from 3 to 8 hydroxyl groups in a molecule,

(c) an aliphatic amine having from 2 to 6 primary and/or secondary amino groups in a molecule and represented by the formula (I) :

$$H_2 N - R \underbrace{-(NH-R)_n}_{} NH_2 \qquad (\text{I})$$

wherein R is an alkylene group of from 1 to 6 carbon atoms in a molecule and n is 0 or an integer of from 1 to 4, and

(d) an alkanolamine represented by the formula (II) or the formula (III):

$H_2 N-R_1 OH$    (II)

$HN = (R_1 OH)_2$    (III)

wherein $R_1$ is an alkylene group having from 1 to 6 carbon atoms.

(2) The polyol of claim 1 wherein the organic polycarboxylic acid or an anhydride thereof is reacted in an amount of from 0.125 to 1.0 mole per one of the hydroxyl group in (a) and/or (b), from 0.166 to 1.0 mole per one of the primary and/or secondary amino group in (c), and from 0.125 to 1.0 mole per one of the sum of hydroxyl group and primary and/or secondary amino group in (d), producing reaction products from (a), (b), (c) and (d) mentioned above, of which claim 1 consists as a single or mixed compound.

(3) The polyol of claim 1 wherein the alkylene oxide is added in an amount of from 1 to 3 moles per one of each functional group of hydroxyl group, primary and/or secondary amino group and carboxyl group in the starting material.

(4) The polyol of claim 1 wherein the reaction of polyhydric alcohol(a), polyoxyalkylene polyol(b), aliphatic amine(c) and alkanolamine(d) with the organic polycarboxylic acid or anhydride thereof and the additional reaction of alkylene oxide to the starting material are conducted in the presence of an amine catalyst represented by the formula (IV) or the formula (V) and/or metal hydroxide catalyst:

$NR_2 R_2 R_3$    (IV)

$R_2 R_3 N (CH_2)_m R_2 R_3$    (V)

wherein $R_2$ and $R_3$ are an atom or a group selected from a group consisting of a hydrogen atom, alkyl group having from 1 to 6 carbon atoms, $-CH_2CH_2OH$ and $-CH_2CH(CH_3)OH$, but $R_2$ and $R_3$ are cannot be hydrogen atoms at the same time in the formula (IV) and m is an integer of from 1 to 6.

(5) A polyurethane resin prepared by mixing and reacting a polyol with an organic polyisocyanate comprising using the polyol of claim 1 as a portion or the whole of said polyol.

(6) The polyurethane resin of claim 5 wherein the amount of the polyol of claim 1 used as a portion or the whole of said polyol is in the range of from 30 to 100 parts by weight per 100 parts by weight of said polyol.

(7) The polyurethane resin of claim 5 wherein the reaction of the polyol with the organic polyisocyanate is conducted in the presence of a catalyst.

(8) The polyurethane resin of claim 5 wherein a part or the whole of the organic polyisocyanate is an isocyanate terminated prepolymer.

(9) The polyurethane resin of claim 5 wherein the equivalent ratio of the isocyanate group in the organic polyisocyanate to the hydroxyl group in the polyol is in the range of from 0.8 to 5.0.

(10) A rigid polyurethane foam obtained by mixing and reacting an organic polyisocyanate with a resin premix containing a polyol, foaming agent, catalyst, cell regulator and other additives which comprises using the polyol of claim 1 as a portion or the whole of said polyol, and said foaming agent being a single or a mixture selected from a group consisting of a hydrochlorofluorocarbon, hydrofluorocarbon, or containing other foaming agent or, if necessary, a mixture thereof with an auxiliary foaming agent which is water

EP 0 409 599 A2

and/or a low boiling point compound.

(11) The rigid polyurethane foam of claim 10 wherein the hydrochlorofluorocarbon is 2,2-dichloro-1,1,1-trifluoroethane or 1,1-dichloro-1-fluoroethane and the hydrofluorocarbon is 1,1,1,2-tetrafluoroethane or 1,1-difluoroethane.

(12) The polyurethane resin of claim 10 wherein the amount of the polyol of claim 1 used as a portion or the whole of said polyol is in the range of from 30 to 100 parts by weight per 100 parts by weight of said polyol.

(13) The rigid polyurethane foam of claim 10 wherein the auxiliary foaming agent is the low boiling point compound.

(14) The rigid polyurethane foam of claim 10 wherein a part or the whole of the organic polyisocyanate is the prepolymer.

(15) The rigid polyurethane foam of claim 10 wherein the equivalent ratio of the isocyanate group in the organic polyisocyanate to the hydroxyl group of the polyol is in the range of from 0.8 to 5.0.

(16) A process for the preparation of a rigid polyurethane foam by mixing and reacting an organic polyisocyanate with a resin premix containing a polyol, foaming agent, catalyst, cell regulator, and other additives which comprises using the polyol of claim 1 as a portion or the whole of said polyol, and said foaming agent being a single or a mixture selected from a group consisting of a hydrochlorofluorocarbon, hydrofluorocarbon, or containing other foaming agent or, if necessary, a mixture thereof with an auxiliary foaming agent which is water and/or a low boiling point compound.

(17) The polyurethane resin of claim 16 wherein the amount of the polyol of claim 1 used as a portion or the whole of said polyol is in the range of from 30 to 100 parts by weight per 100 parts by weight of said polyol.

(18) The process of claim 16 wherein the hydrochlorofluorocarbon is 2,2-dichloro-1,1,1-trifluoroethane or 1,1'-dichloro-1-fluoroethane and the hydrofluorocarbon is 1,1,1,2-tetrafluoroethane or 1,1-difluoroethane.

(19) The process of claim 16 wherein the auxiliary foaming agent is the low boiling point compound.

(20) The process of claim 16 wherein a part or the whole of the organic polyisocyanate is the prepolymer.

(21) The process of claim 16 wherein the equivalent ratio of the isocyanate group in the organic polyisocyanate to the hydroxyl group of the polyol is in the range of from 0.8 to 5.0.

(22) A process for the preparation of a rigid polyurethane foam composite by mixing an organic polyisocyanate with a resin premix containing a polyol, foaming agent, catalyst, cell regulator and other additives and foaming said rigid polyurethane foam on a facing material or in a cavity surrounded by a plurality of the facing material to constitute said composite which comprises using the polyol of claim 1 as a portion or the whole of said polyol, and said foaming agent being a single or a mixture selected from a group consisting of a hydrochlorofluorocarbon, hydrofluorocarbon, or containing other foaming agent or, if necessary, a mixture thereof with an auxiliary foaming agent which is water and/or a low boiling point compound.

(23) The polyurethane resin of claim 22 wherein the amount of the polyol of claim 1 used as a portion or the whole of said polyol is in the range of from 30 to 100 parts by weight per 100 parts by weight of said polyol.

(24) The process of claim 22 wherein a plurality of the facing material consists of a pair of facing material which are opposite to each other.

(25) The process of claim 22 wherein a plurality of the facing material consists of a top facing material, a bottom facing material and a plurality of side facing material.

(26) The process of claim 22 wherein a plurality of the facing material consists of the bottom facing material and a plurality of the side facing material.

(27) The process of claim 22 wherein the preparation of the rigid polyurethane foam is conducted by applying to, pouring in, or spraying on a plurality of the facing material.

(28) The process of claim 22 wherein the preparation of the rigid polyurethane foam is conducted by spraying on one facing material.

(29) The process of claim 22 wherein the hydrochlorofluorocarbon is 2,2-dichloro-1,1,1-trifluoroethane or 1,1-dichloro-1-fluoroethane and the hydrofluorocarbon is 1,1,1,2-tetrafluoroethane or 1,1-difluoroethane.

(30) The process of claim 22 wherein the auxiliary foaming agent is water and/or the low boiling point compound.

(31) The process of claim 22 wherein a part or the whole of the organic polyisocyanate is the prepolymer.

(32) The process of claim 22 wherein the equivalent ratio of the isocyanate group in the organic polyisocyanate to the hydroxyl group of the polyol is in the range of 0.8 to 5.0.

27